# EUROPEAN PATENT APPLICATION

(11) **EP 4 403 386 A1**
(43) Date of publication of application: **24.07.2024**
(21) Application number: 23275011.7
(22) Date of filing: 18.01.2023
(51) Int. Cl.: B60G 11/26, B60G 11/30, F16F 9/06, F16F 9/32

(54) **SUSPENSION STRUT ASSEMBLY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A suspension strut assembly (10) comprising a strut cylinder (100) that is hollow and defines a chamber (110) and has a first free end (12). A strut cylinder piston (200) is located in, and operable to move along, the strut cylinder chamber (110) to define a first strut cylinder sub-chamber region (112) on one side of the strut cylinder piston (200) and a second strut cylinder sub-chamber region (114) on the other side of the strut cylinder piston (200). A suspension rod (300) extends from the strut cylinder piston (200) inside the second strut cylinder sub-chamber region (114), through an aperture (116) in the strut cylinder (100), to a second free end (14) outside of the strut cylinder chamber (110). The first strut cylinder sub-chamber region (112) is configured to be in fluid communication with a first working fluid circuit (1000) via a first flow port (120). The second strut cylinder sub-chamber region (114) is configured to be in fluid communication with a second working fluid circuit (2000) via a second flow port (122). The suspension strut assembly (10) being operable to vary the distance between the first free end (12) and the second free end (14) of the suspension strut assembly (10) by the first flow port (120) being operable to control the flow of the first working fluid (400) between the first working fluid circuit (1000) and the first strut cylinder sub-chamber region (112); and by the second flow port (122) being operable to control the flow of the second working fluid (402) between the second working fluid circuit (2000) and the second strut cylinder sub-chamber region (114).

## Description

### FIELD

The present disclosure relates to a suspension strut assembly.

In particular the disclosure is concerned with a suspension strut assembly for a vehicle.

### BACKGROUND

In vehicle suspension, it is common for a suspension strut to be used to provide the required spring force and damping. The suspension serves primarily to act to improve passenger comfort, vehicle handling, and reduce shock loads to the vehicle.

In some examples vehicles also use the strut to alter ride height to alter ground clearance for changing ground conditions, load conditions or aerodynamics. Ride height can also be altered to maintain a level vehicle.

Certain vehicles, particularly Heavy Goods Vehicles also use suspension struts to lift a wheel or wheels from the ground, for example to reduce rolling resistance when carrying light loads. These systems use compressed air to fill vessels which raise and lower the wheel or wheels.

In some all-terrain vehicles it is desirable for suspension to both be configured to alter the ride height of the vehicle and to be able to lift a wheel of the vehicle free from the ground when approaching an obstruction and to then use the same wheel and suspension to lift the vehicle and move forwards (for example to climb over an obstruction). However, solutions of the related art are not able to provide the necessary combination of functionality.

Hence a suspension strut assembly which has the functionality to lift wheels of a vehicle from the ground as well as be operable to alter the ride height of the vehicle to which they are attached is highly desirable.

### SUMMARY

According to the present disclosure there is provided an apparatus, system and method as set forth in the appended claims. Other features of the invention will be apparent from the dependent claims, and the description which follows.

Accordingly there may be provided a suspension strut assembly (10). The suspension strut assembly (10) may comprise a strut cylinder (100) having a first free end (12), and which is hollow and defines a chamber (110).

The suspension strut assembly (10) may comprise a strut cylinder piston (200) located in, and operable to move along, the strut cylinder chamber (110) to define a first strut cylinder sub-chamber region (112) on one side of the strut cylinder piston (200) and a second strut cylinder sub-chamber region (114) on the other side of the strut cylinder piston (200).

The suspension strut assembly (10) may comprise a suspension rod (300) which extends from the strut cylinder piston (200) inside the second strut cylinder sub-chamber region (114), through an aperture (116) in the strut cylinder (100), to a second free end (14) outside of the strut cylinder chamber (110).

The first strut cylinder sub-chamber region (112) may be configured to be in fluid communication with a first working fluid circuit (1000) via a first flow port (120). The second strut cylinder sub-chamber region (114) may be configured to be in fluid communication with a second working fluid circuit (2000) via a second flow port (122)

The suspension strut assembly (10) may be operable to vary the distance between the first free end (12) and the second free end (14) of the suspension strut assembly (10) by the first flow port (120) being operable to control the flow of the first working fluid (400) between the first working fluid circuit (1000) and the first strut cylinder sub-chamber region (112).

The suspension strut assembly (10) may be operable to vary the distance between the first free end (12) and the second free end (14) of the suspension strut assembly (10) by the second flow port (122) being operable to control the flow of the second working fluid (402) between the second working fluid circuit (2000) and the second strut cylinder sub-chamber region (114).

The suspension strut assembly (10) may be configured such that when the first flow port (120) and the second flow port (122) are controlled to be open flow of first working fluid (400) into the first strut cylinder sub-chamber region (112) from the first working fluid circuit (1000) through the first flow port (120) causes relative movement between the strut cylinder (100) and the strut cylinder piston (200) to cause the second working fluid (402) to flow from the second strut cylinder sub-chamber region (114) to the second working fluid circuit (2000) through the second flow port (122) and to increase the distance between the first free end (12) and the second free end (14) of the suspension strut assembly (10).

The suspension strut assembly (10) may be configured such that when the first flow port (120) and the second flow port (122) are controlled to be open flow of second working fluid (402) into the second strut cylinder sub-chamber region (114) from the second working fluid circuit (2000) through the second flow port (122) causes relative movement between the strut cylinder (100) and the strut cylinder piston (200) to cause the first working fluid (400) to flow from the first strut cylinder sub-chamber (112) to the first working fluid circuit (1000) through the first flow port (120) and to decrease the distance between the first free end (12) and the second free end (14) of the suspension strut assembly (10).

An annulus (320) may be defined between the suspension rod (300) and the strut cylinder (100).

The suspension rod (300) may be hollow and define a suspension rod chamber (310).

A suspension rod floating piston (302) may be located in, and operable to move along, the suspension rod chamber (310) to define a first suspension rod sub-chamber region (312) on one side of the suspension rod floating piston (302) and a second suspension rod sub-chamber region (314) on the other side of the suspension rod floating piston (302).

The first suspension rod sub-chamber region (312) may be in fluid communication with the first strut cylinder sub-chamber region (112) and configured to retain the first working fluid (400).

The first suspension rod sub-chamber region (312) may be in fluid communication with the first working fluid circuit (1000) via the first strut cylinder sub-chamber region (112).

The second suspension rod sub-chamber region (314) may be configured to retain a third working fluid (404); the first suspension rod sub-chamber region (312) being fluidly isolated from the second suspension rod sub-chamber region (314).

The suspension strut assembly (10) may further comprise an accumulator (500) in fluid communication with the annulus (320). The accumulator (500) may be hollow and define an accumulator chamber (510), an accumulator floating piston (502) being provided in, and operable to move along, the accumulator chamber (510), to define a first accumulator sub-chamber region (512) on one side of the secondary accumulator floating piston (502) and a second accumulator sub-chamber region (514) on the other side of the secondary accumulator floating piston (502).

The first accumulator sub-chamber region (512) may be in fluid communication with the annulus (320) and configured to retain the second working fluid (402). The first accumulator sub-chamber region (512) may be in fluid communication with the second working fluid circuit (2000).

The second accumulator sub-chamber region (514) may be configured to retain a fourth working fluid (406). The first accumulator sub-chamber region (512) may be being fluidly isolated from the second accumulator sub-chamber region (514).

A first mount (20) may define the first free end (12) of the strut cylinder (100). A second mount (22) may define the second free end (14) of the suspension rod (300).

There may be provided a suspension system (600) for a vehicle (602) comprising a first suspension strut assembly (10) according to the present disclosure and a control system (604), the control system (604) operable to control the first flow port (120) and second flow port (122).

The suspension system (600) for a vehicle (602) may further comprise a second suspension strut assembly (10) according to the present disclosure, wherein the first suspension strut assembly (10) and second suspension strut assembly (10) are operable independently of one another.

One of the first mount (20) or second mount (22) may be coupled to a chassis (620) of the vehicle (602) and the other of the first mount (20) and second mount (22) may be coupled to a chassis support (622).

There may be provided a method of operation of a suspension system (600) for a vehicle (602). In a first mode of operation the first flow port (120) may be open and the first working fluid (400) may be controlled to flow from the first strut cylinder sub-chamber region (112) to the first working fluid circuit (1000); and the second flow port (122) may be open and the second working fluid (402) may be controlled to flow from the second working fluid circuit (2000) to the second strut cylinder sub-chamber region (114) to decrease the distance between the first free end (12) and the second free end (14) of the suspension strut assembly (10).

In a second mode of operation the first flow port (120) may be open and the first working fluid (400) may be controlled to flow to the first strut cylinder sub-chamber region (112) from the first working fluid circuit (1000); and the second flow port (122) may be open and the second working fluid (402) may be controlled to flow to the second working fluid circuit (2000) from the second strut cylinder sub-chamber region (114) to increase the distance between the first free end (12) and the second free end (14) of the suspension strut assembly (10).

In a third mode of operation the first flow port (120) may be closed; the second flow port (122) may be closed; the suspension rod floating piston (302) may be located substantially midway along the length of the suspension rod chamber (310); and the accumulator floating piston (502) may be located substantially midway along the length of the accumulator chamber (510), such that: in response to a compressive force on the suspension strut assembly (10), the first working fluid (400) flows from the first strut cylinder sub-chamber region (112) to the first suspension rod sub-chamber region (312), and the third working fluid (404) is compressed; and the second working fluid (402) flows from the first accumulator sub-chamber region (512) to the second strut cylinder sub-chamber region (114) such that the fourth working fluid (406) expands; and in response to a reduction in compressive force on the suspension strut assembly (10), the first working fluid (400) flows to the first strut cylinder sub-chamber region (112) from the first suspension rod sub-chamber region (312), and the third working fluid (404) is expanded, and the second working fluid (402) flows to the first accumulator sub-chamber region (512) from the second strut cylinder sub-chamber region (114) such that the fourth working fluid (406) compresses.

Hence there is provided a suspension strut assembly which has the functionality to lift wheels of a vehicle from the ground as well as be operable to alter the ride height of the vehicle to which they are attached.

### BRIEF DESCRIPTION OF THE FIGURES

Embodiments of the invention will now be described by way of example only with reference to the figures, in which:
Figure 1 shows an end on view of vehicle comprising a suspension system according to the present disclosure in a first state;
Figure 2 shows an end on view of vehicle comprising a suspension system according to the present disclosure in a second state;
Figure 3 shows a sectional view of a suspension strut assembly according to the present disclosure;
Figures 4 to 7 show stages of operation of the suspension strut assembly in a first mode of operation; and
Figures 8 to 11 show stages of operation of the suspension strut assembly in a second mode of operation.

### DETAILED DESCRIPTION

The present disclosure relates to a suspension strut assembly 10 operable to provide a required spring force and load damping while also being operable to be increased and decreased in length, L.

That is to say, the suspension strut assembly 10 of present disclosure comprises a spring damping arrangement and is configured such that its unloaded length (e.g. the distance from a first free end 12 to a second free end 14 of the suspension strut assembly 10, when no compression force or tension force are applied to the spring damping arrangement) may be set such that the only variance in length after the unloaded length is set will be due to an applied compression force acting to reduce the distance between the first free end 12 and second free end 14 of the suspension strut assembly 10 (e.g. shorten the suspension strut assembly 10) against the bias of the spring damping arrangement and/or an applied tension force acting to increase the distance between the first free end 12 and second free end 14 of the suspension strut assembly 10 (e.g. lengthen the suspension strut assembly 10).

Hence a first mount 20 may define the first free end 12 of the suspension strut assembly 10 and a second mount 22 may define the second free end 14 of the suspension strut assembly 10.

The present disclosure also relates to a suspension system 600 for a vehicle 602 comprising at least a first suspension strut assembly 10.

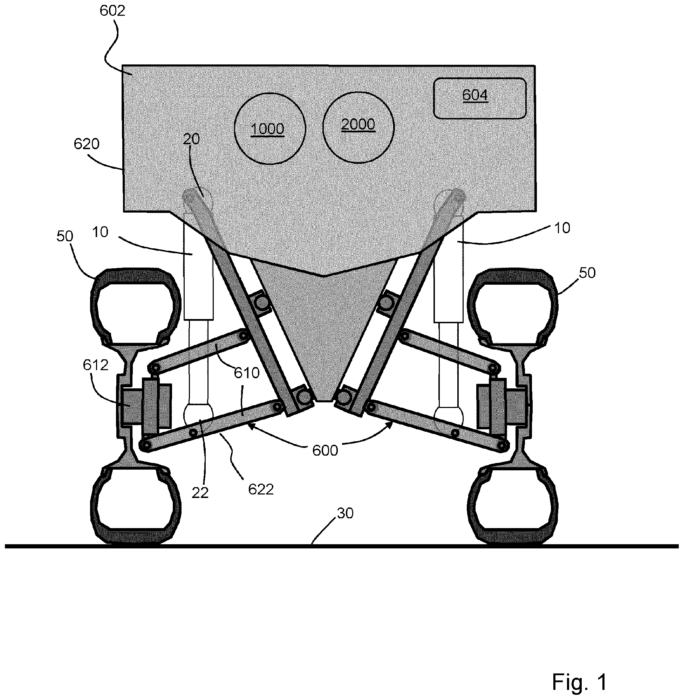

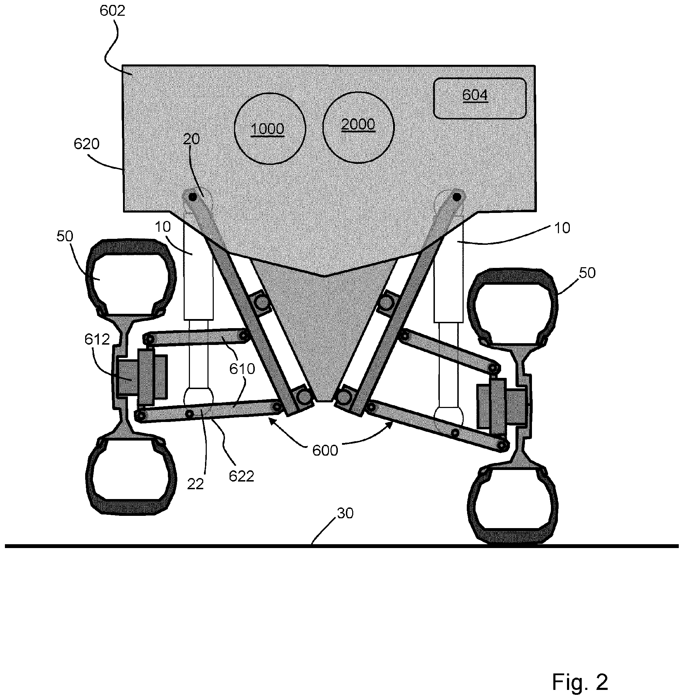

The present disclosure also relates to a vehicle 602 comprising a suspension system 600 having a suspension strut assembly 10 according to the present disclosure, for example as shown in figures 1, 2. In such an example, one of the first free end 12 (e.g. the first mount 20) or second free end 14 (e.g. the second mount 22) is coupled to a chassis 620 of a vehicle 602 and the other of the first end (e.g. the first mount 20) and second end (e.g. the second mount 22) is coupled to a chassis support 622. The chassis support 622 may be of any conventional kind. By way of nonlimiting example, the chassis support 622 shown in figures 1, 2 comprises a number of pivotable support arms 610, configured to carry a hub 612 which is in turn configured to couple to a rotatable wheel assembly 50 (hereinafter referred to as a wheel), and thereby couple the wheel 50 relative to the chassis 620. The wheel assembly 50 may be of any conventional kind, for example a flexible inflatable tyre carried on a metal inner wheel, the inner wheel being configured to couple to the hub 612.

The suspension system 600 may further comprise a second suspension strut assembly 10 according to the present disclosure, wherein the first suspension strut assembly 10 and second suspension strut assembly 10 are operable independently of one another. In further examples the suspension system 600 may comprise a plurality of suspension strut assemblies 10 according to the present disclosure, wherein each suspension strut assembly 10 is operable independently of each, or at least some, of the other suspension strut assemblies 10.

In some examples, the suspension system 600 may comprise a control system 604, the control system operable to control the unloaded length of a suspension strut assembly 10, or operable to control each or some of the suspension strut assemblies 10.

The chassis support 622 is configured to allow relative movement between the wheel 50 and chassis 620, and thereby allow the relative position of the wheel 50 and chassis 620 to vary, for example between a first relative position as shown in figure 1 in which one of the wheels 50 sits on the same plane 30 as another wheel 50, and a second relative position as shown in figure 2 in which one of the wheels 50 (shown on the left of the figure) is raised above the plane 30 (for example having been lifted clear of the supporting surface/ground or reacting in response to an obstacle on the supporting surface/ground).

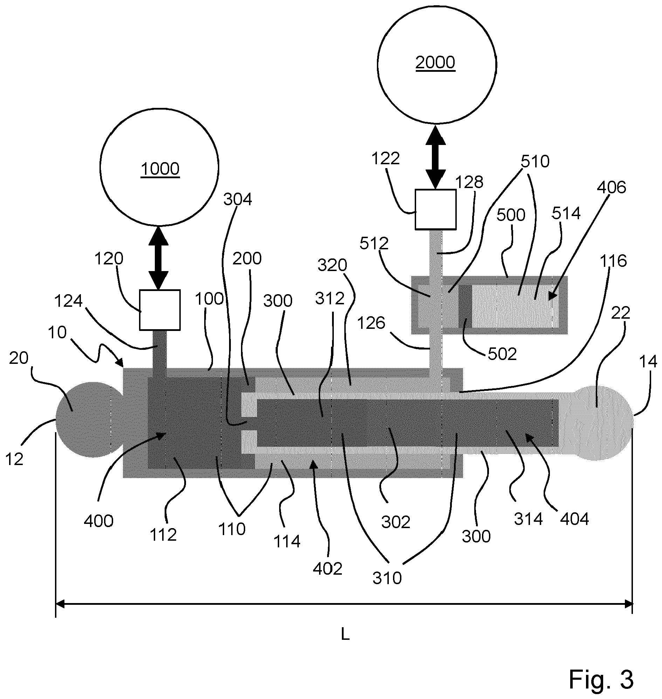

The arrangement shown in figures 1, 2 is only one of many conventional ways in which the suspension strut assembly 10 may be incorporated into a vehicle. For example the chassis support 622 may comprise a different number and/or arrangement of pivotable support arms 610. Alternatively one of the mounts 20, 22 may be coupled directly to the hub 612 and the other directly to the chassis 620, or comprise a different number and/or arrangement of support arms 610 to that shown in figures 1, 3.

Hence the suspension strut assembly 10 of the present disclosure may form part of a suspension system 600 and/or a vehicle 602 and by virtue of the suspension strut assembly 10 be operable to be fixed at different lengths, and able to support the weight of the wheel 50 and/or (at least in part) the weight of the vehicle 602. In this way the suspension strut assembly 10 provides functionality to lift the wheel 50 it is coupled to from the ground, provide a force to alter the ride height of the vehicle 602 relative to the ground as well as provide spring force and damping.

As shown in figure 3, the suspension strut assembly 10 may comprise a strut cylinder 100 having a first free end 12. The strut cylinder 100 is hollow and defines a chamber 110.

The suspension strut assembly 10 may further comprise a strut cylinder piston 200 located in, and operable to move along, the strut cylinder chamber 110 to define a first strut cylinder sub-chamber region 112 on one side of the strut cylinder piston 200 and a second strut cylinder sub-chamber region 114 on the other side of the strut cylinder piston 200.

A suspension rod 300 may extend from the strut cylinder piston 200 inside the second strut cylinder sub-chamber region 114, through an aperture 116 in the strut cylinder 100, to a second free end 14 outside of the strut cylinder chamber 110. The distance between the first free end 12 and the second free end 14 defines the length of the suspension strut assembly 10.

There may also be provided an external/auxiliary hydraulic system in fluid communication with a first working fluid circuit 1000 to provide a supply of a first working fluid 400 and a second working fluid circuit 2000 to provide a supply of a second working fluid 402. The first working fluid 400 may be incompressible. The second working fluid 402 may be incompressible. The external/auxiliary hydraulic system may comprise or define a reservoir for working fluid (i.e. a source of working fluid). The first working fluid circuit 1000 and the second working fluid circuit 2000 may be in fluid communication with one another via the external/auxiliary hydraulic system insofar as they receive and deliver working fluid from the same source. In another example the first working fluid circuit 1000 and the second working fluid circuit 2000 may be fluidly isolated from one another - for example the first working fluid circuit 1000 and the second working fluid circuit 2000 may be in fluid communication with different hydraulic system reservoirs.

The first working fluid circuit 1000 and second working fluid circuit 2000 are configured to deliver working fluid to and receive working fluid from the external/auxiliary hydraulic system. The external/auxiliary hydraulic system, first working fluid circuit 1000 and second working fluid circuit 2000 may be provided as part of the suspension system 600 and/or the vehicle 602.

As shown in figure 3, the first strut cylinder sub-chamber region 112 is configured to be in fluid communication with the first working fluid circuit 1000 via a first flow port 120. In the arrangement shown in figure 3, the first flow port 120 is provided in fluid communication with the first working fluid circuit 1000. Specifically the first flow port 120 is provided in fluid communication with the first working fluid circuit 1000 via a first flow conduit 124.

Also as shown in figure 3, the second strut cylinder sub-chamber region 114 is configured to be in fluid communication with a second working fluid circuit 2000 via a second flow port 122. In the arrangement shown in figure 3, the second flow port 122 is provided in fluid communication with the second working fluid circuit 2000. Specifically the second strut cylinder sub-chamber region 114 is provided in fluid communication with the second working fluid circuit 2000 via a second flow conduit 126. Hence, in this example, the second strut cylinder sub-chamber region 114 is provided in fluid communication with the second working fluid circuit 2000 via the second flow conduit 126 and second flow port 122.

The first flow port 120 and second flow port 122 may each be provided as a flow control valve.

The suspension strut assembly 10 is configured, and operable, to vary the distance between the first free end 12 and the second free end 14 of the suspension strut assembly 10 by the first flow port 120 being operable to control the flow of the first working fluid 400 between the first working fluid circuit 1000 and the first strut cylinder sub-chamber region 112 and by the second flow port 122 being operable to control the flow of the second working fluid 402 between the second working fluid circuit 2000 and the second strut cylinder sub-chamber region 114. As will be described, synchronising the flows through the first flow port 120 and second flow port 122 induces relative movement between the strut cylinder 100 and the strut cylinder piston 200.

In examples where present, the control system 604 is operable to control the first flow port 120 and second flow port 122.

An annulus 320 may be defined between the suspension rod 300 and the strut cylinder 100.

As shown in figure 3, the suspension rod 300 may be hollow and define a suspension rod chamber 310. A suspension rod floating piston 302 may be located in, and operable to move along, the suspension rod chamber 310 to define a first suspension rod sub-chamber region 312 on one side of the suspension rod floating piston 302 and a second suspension rod sub-chamber region 314 on the other side of the suspension rod floating piston 302. The first suspension rod sub-chamber region 312 may be in fluid communication with the first strut cylinder sub-chamber region 112 and configured to retain the first working fluid 400.

The first suspension rod sub-chamber region 312 may be in fluid communication with the first strut cylinder sub-chamber region 112 via a third flow port 304 defined by a wall of the suspension rod 300, such that there is direct flow communication between the first suspension rod sub-chamber region 312 and first strut cylinder sub-chamber region 112.

Hence the first suspension rod sub-chamber region 312 may be in fluid communication with the first working fluid circuit 1000 via the first strut cylinder sub-chamber region 112.

The second suspension rod sub-chamber region 314 may be configured to retain a third working fluid 404. The first suspension rod sub-chamber region 312 may be fluidly isolated from the second suspension rod sub-chamber region 314. The third working fluid 404 may be a compressible fluid.

Hence since the suspension rod floating piston 302 and suspension rod chamber 310 enclose (i.e. retain) the third working fluid 404, they define in combination a spring damping arrangement. That is to say, the motion of the suspension rod floating piston 302 along the suspension rod chamber 310 to reduce the size of the second suspension rod sub-chamber region 314 will compress third working fluid 404, thereby resisting the motion of the suspension rod floating piston 302 in that direction. Additionally, the motion of the suspension rod floating piston 302 along the suspension rod chamber 310 to increase the size of the second suspension rod sub-chamber region 314 will happen in response to the expansion of the third working fluid 404. Hence expansion of the third working fluid 404 causes movement of the suspension rod floating piston 302 and hence extension of the suspension strut assembly 10. The movement of the suspension rod floating piston 302 pushes the first working fluid 400 from the first suspension rod sub-chamber region 312, through the third flow port 304, which provides rebound damping.

That is to say, the third working fluid 404 in the second suspension rod sub-chamber region 314 provides a suspension spring (e.g. a gas spring if the third working fluid 404 is a gas) located inside the hollow suspension rod 300. Thus the third working fluid 404 is separated from the first working fluid 400 by a floating piston 302. The third flow port 304 defines a damping throttle located on the end of the suspension rod 300 to throttle fluid as it moves from the suspension rod 300 into the first strut cylinder sub-chamber region 112 or vice versa as appropriate. In an alternate arrangement, spring force and damping may be applied externally to the suspension strut assembly 10, or via a different internal arrangement.

Hence suspension spring force may be provided internally within the suspension strut assembly 10.

Additionally or alternatively, an external spring may be linked either mechanically or hydraulically to the suspension strut assembly 10 strut so that suspension spring force may be provided externally to the suspension strut assembly 10.

As shown in figure 3, the suspension strut assembly 10 may further comprise an accumulator 500 in fluid communication with the annulus 320. The accumulator 500 may be hollow and define an accumulator chamber 510. An accumulator floating piston 502 is located (i.e. is provided) in, and operable to move along, the accumulator chamber 510, to define a first accumulator sub-chamber region 512 on one side of the secondary accumulator floating piston 502 and a second accumulator sub-chamber region 514 on the other side of the secondary accumulator floating piston 502. The first accumulator sub-chamber region 512 may be in fluid communication with the annulus 320 via the second flow conduit 126. The first accumulator sub-chamber region 512 may be configured to retain the second working fluid 402. The first accumulator sub-chamber region 512 may be in fluid communication with the second working fluid circuit 2000. For example the first accumulator sub-chamber region 512 may be in fluid communication with the second working fluid circuit 2000 via a third flow conduit 128.

Hence, in this example, the second strut cylinder sub-chamber region 114 is provided in fluid communication with the second working fluid circuit 2000 via the second flow conduit 126, first accumulator sub-chamber region 512, third flow conduit 128 and second flow port 122.

The second accumulator sub-chamber region 514 is configured to retain a fourth working fluid 406. The fourth working fluid may be a compressible fluid. The first accumulator sub-chamber region 512 may be fluidly isolated from the second accumulator sub-chamber region 514.

The first mount 20 may define the first free end 12 of the strut cylinder 100, and the second mount 22 may define the second free end 14 of the suspension rod 300.

The suspension strut assembly 10 is thus configured such that when the first flow port 120 and the second flow port 122 are controlled to be open, flow of second working fluid 402 into the second strut cylinder sub-chamber region 114 from the second working fluid circuit 2000 through the second flow port 122 causes relative movement between the strut cylinder 100 and the strut cylinder piston 200 to thereby cause the first working fluid 400 to flow from the first strut cylinder sub-chamber 112 to the first working fluid circuit 1000 through the first flow port 120, which causes the distance between the first free end 12 and the second free end 14 of the suspension strut assembly 10 to decrease.

Hence, during operation of the suspension system 600 in a first mode of operation the first flow port 120 is open and the first working fluid 400 is controlled to flow from the first strut cylinder sub-chamber region 112 to the first working fluid circuit 1000, and the second flow port 122 is open and the second working fluid 402 is controlled to flow from the second working fluid circuit 2000 to the second strut cylinder sub-chamber region 114 to decrease the distance between the first free end 12 and the second free end 14 of the suspension strut assembly 10.

The suspension strut assembly 10 is also thus configured such that when the first flow port 120 and the second flow port 122 are controlled to be open, flow of the first working fluid 400 into the first strut cylinder sub-chamber region 112 from the first working fluid circuit 1000 through the first flow port 120 causes relative movement between the strut cylinder 100 and the strut cylinder piston 200 to cause the second working fluid 402 to flow from the second strut cylinder sub-chamber region 114 to the second working fluid circuit 2000 through the second flow port 122 which thereby causes the distance between the first free end 12 and the second free end 14 of the suspension strut assembly 10 to increase.

Hence, during operation of the suspension system 600 in a second mode of operation the first flow port 120 is open and the first working fluid 400 is controlled to flow to the first strut cylinder sub-chamber region 112 from the first working fluid circuit 1000, and the second flow port 122 is open and the second working fluid 402 is controlled to flow to the second working fluid circuit 2000 from the second strut cylinder sub-chamber region 114 to increase the distance between the first free end 12 and the second free end 14 of the suspension strut assembly 10.

In a third mode of operation the first flow port 120 is closed, the second flow port 122 is closed, the suspension rod floating piston 302 is located substantially midway along the length of the suspension rod chamber 310 and the accumulator floating piston 502 is located substantially midway along the length of the accumulator chamber 510. With this configuration, in response to a compressive force on the suspension strut assembly 10, e.g. going over an obstacle, the first working fluid 400 flows from the first strut cylinder sub-chamber region 112 to the first suspension rod sub-chamber region 312, and the third working fluid 404 is compressed, and the second working 402 fluid flows from the first accumulator sub-chamber region 512 to the second strut cylinder sub-chamber region 114 such that the fourth working fluid 406 expands.

With this same configuration, in response to a reduction in compressive force on the suspension strut assembly 10, (e.g. rebound after going over an obstacle), the first working fluid 400 flows to the first strut cylinder sub-chamber region 112 from the first suspension rod sub-chamber region 312, and the third working fluid 404 expands, and the second working fluid 402 flows to the first accumulator sub-chamber region 512 from the second strut cylinder sub-chamber region 114 such that the fourth working fluid 406 is compressed.

Hence driving/operation of a vehicle may be undertaken with hydraulic fluid present in both the first strut cylinder sub-chamber 112 and annulus 320. In the preferred arrangement, the first strut cylinder sub-chamber 112 and annulus 320 are connected to the external hydraulic power source (1000, 2000) with the flow ports 120, 122 closed once the desired ride height is achieved, in order to reduce power requirements and to reduce the demands on, and complication of, the hydraulic system. Alternatively, active or passive control of fluid could allow for a system where this shut off is not required.

The annulus 320 side of the strut uses the accumulator 500 to prevent cavitation as the suspension strut assembly 10 contracts under suspension loads, and to prevent hydraulic lock when it extends on rebound, when the second port 122 is closed.

Hence the present system provides the functionality of driving the suspension strut assembly 10 such that the wheel 50 may be lifted from the ground. By virtue of having both a first strut cylinder sub-chamber 112 and annulus 320 side to the strut assembly, significant force may be applied by the strut assembly to lift the wheel 50.

Having raised one wheel or wheels and placed them on a step, the strut assembly may remain rigid, or may be allowed to return to function as suspension, albeit at a different length to the others on the vehicle.

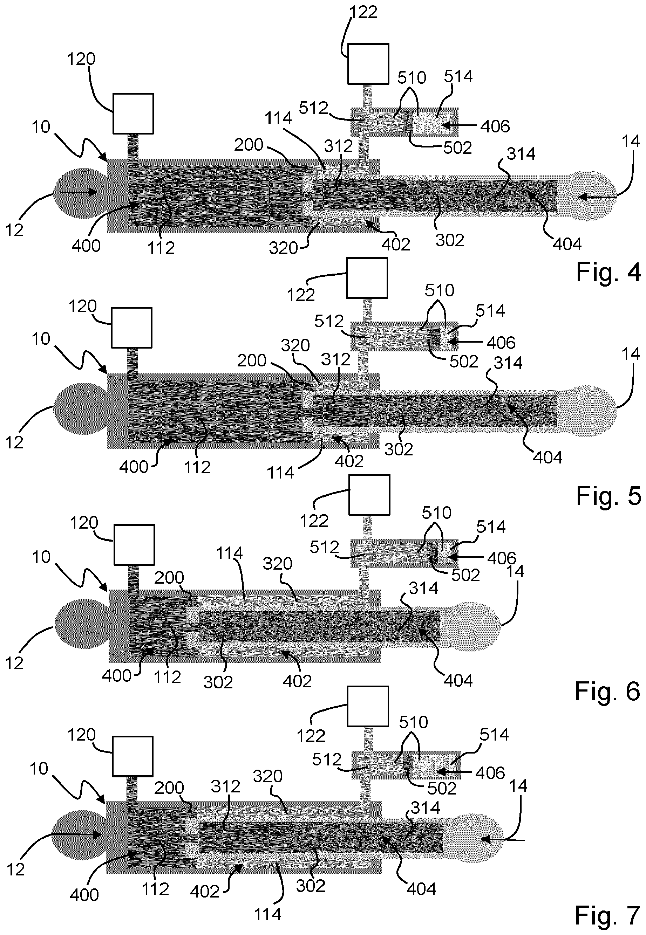

In an arrangement as shown in figures 1, 2, using a strut assembly 10 as shown in figure 3, the approximate sequence of operation of the preferred arrangement in lifting one wheel 50 off the ground is as illustrated in figures 4 to 7.

Figure 4 illustrates a condition of the strut assembly 10 as shown in figure 1. Hence in this condition vehicle weight applies compressive force to the strut assembly 10. The first flow port 120 and second flow port 122 are closed. The suspension rod floating piston 302 may be approximately midway along the suspension rod chamber 310 to accommodate movement of the suspension rod floating piston 302 in both directions along the suspension rod chamber 310 to enable it to respond to a contraction of the strut assembly 10 (e.g. when the wheel goes over an obstacle) and respond to an extension of the strut assembly (e.g. when the wheel rebounds from its compressed state to an extended state).

If strut assembly 10 compresses when driving the vehicle, the second working fluid 402 (i.e. at low pressure) flows out of accumulator chamber 510 to fill annulus 320. Conversely if the suspension strut assembly 10 extends, second working fluid 402 (e.g. at low pressure) flows from the annulus 320 into the secondary accumulator chamber 510.

If it is required to lift the wheel 50, and as shown in Figure 5, the second flow port 122 is opened and working fluid 402 is pushed into the annulus 320 from the second working fluid circuit 2000. Additionally the first fluid port 120 is opened and fluid is let out of first strut cylinder sub-chamber region 112 side (first flow port 120) in controlled manner. This results in the main spring (i.e. assembly of the suspension rod floating piston 302, suspension rod sub-chamber region 314 and third working fluid 404) "relaxing" as the wheel 50 lifts.

As shown in figure 6, the strut assembly 10 is retracted until wheel 50 is in desired raised position (e.g. as shown in figure 2).

If it is required for the wheel 50 to be placed on a step/obstacle, it then needs to take a share of vehicle weight. To enable this, as shown in figure 7, the first working fluid 400 is pushed into the first strut cylinder sub-chamber region 112 to take weight. High fluid pressure could be maintained in the annulus side 320 (giving a rigid strut) but could be partially let out to allow suspension movement of a shorter length strut, as shown in figures 4-7.

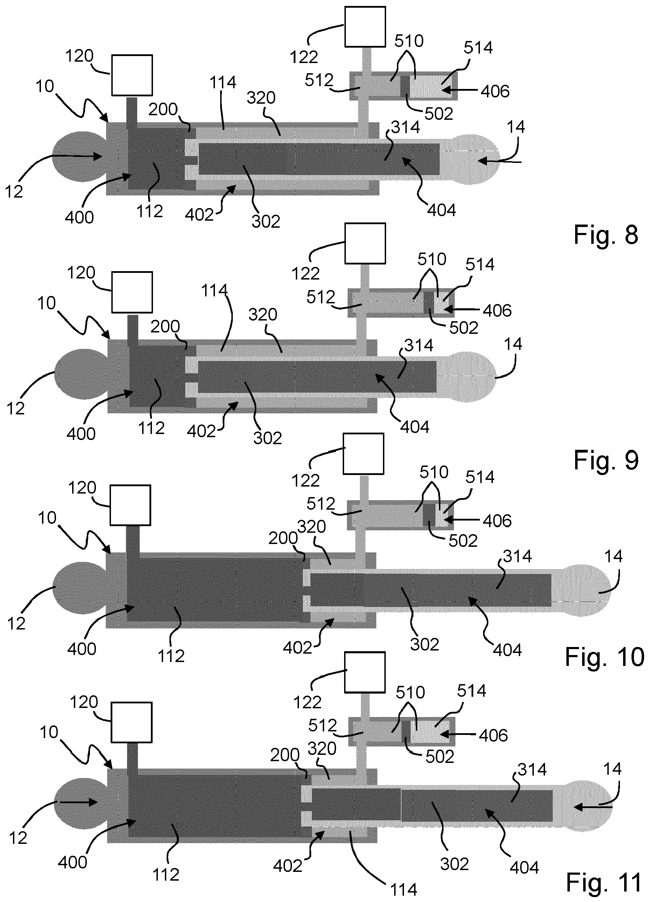

If it is required to reverse the process, e.g. lengthen the strut assembly (as shown in figures 8 to 11) to either lift the vehicle or locate the wheel 50 in contact with the ground, then working fluid 400 is pumped into the first flow port 120 at the same time as the second working fluid 402 is pushed out of the first strut cylinder sub-chamber region 112 through the second flow port 122.

The opening and closing of the flow ports 120, 122 may be performed under the control of the control system 604. For example, the flow ports 120, 122 may comprise actuators which respond to a signal from the control system 604 to open and close the flow ports 120, 122.

Hence there is provided a suspension strut assembly which, as well performing the normal shock damping functionality of a conventional suspension strut assembly, also has the functionality to lift wheels of a vehicle from the ground, and support them spaced apart from the ground, as well as being operable to alter the ride height of the vehicle to which they are attached (i.e. the suspension strut assembly being able to support the weight of the vehicle while its length is altered).

The suspension strut assembly of the present disclosure achieves this by virtue of incorporating a double acting cylinder where hydraulic fluid is transferred to or from the annulus 320 or bore side (first strut cylinder sub-chamber region 112) as appropriate to allow a wheel or wheels which are supported by the suspension strut assembly to be lifted off the ground and/or change ride height.

Hence the strut assembly of the present disclosure provides a functionality that adding fluid to the bore side (first strut cylinder sub-chamber region 112) will extend the strut and (depending on the way in which the suspension strut assembly is coupled to the vehicle and wheel 50) raise the ride height. In the same example, allowing fluid to exit the bore side (first strut cylinder sub-chamber region 112) will allow the strut to contract/retract under vehicle weight.

Advantageously the third working fluid 404 in the second suspension rod sub-chamber region 314 provides a suspension spring (e.g. a gas spring if the third working fluid 404 is a gas) located inside the hollow suspension rod 300.

The suspension strut assembly of the present disclosure can act alongside other struts as part of a vehicle suspension system which can raise or lower a single wheel or wheels independently of the other suspension struts. In such examples, at least some of the suspension strut assemblies of the vehicle suspension system can provide spring force and damping independently of the other suspension strut assemblies and without the necessity for constant hydraulic power.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A suspension strut assembly comprising:
a strut cylinder having a first free end, and which is hollow and defines a chamber;
a strut cylinder piston located in, and operable to move along, the strut cylinder chamber to define a first strut cylinder sub-chamber region on one side of the strut cylinder piston and a second strut cylinder sub-chamber region on the other side of the strut cylinder piston;
a suspension rod which extends from the strut cylinder piston inside the second strut cylinder sub-chamber region, through an aperture in the strut cylinder, to a second free end outside of the strut cylinder chamber;
the first strut cylinder sub-chamber region configured to be in fluid communication with a first working fluid circuit via a first flow port; the second strut cylinder sub-chamber region configured to be in fluid communication with a second working fluid circuit via a second flow port;
the suspension strut assembly being operable to vary the distance between the first free end and the second free end of the suspension strut assembly by the first flow port being operable to control the flow of the first working fluid between the first working fluid circuit and the first strut cylinder sub-chamber region; and by the second flow port being operable to control the flow of the second working fluid between the second working fluid circuit and the second strut cylinder sub-chamber region.

2. . A suspension strut assembly as claimed in claim 1 configured such that when the first flow port and the second flow port are controlled to be open:
flow of first working fluid into the first strut cylinder sub-chamber region from the first working fluid circuit through the first flow port causes relative movement between the strut cylinder and the strut cylinder piston to cause the second working fluid to flow from the second strut cylinder sub-chamber region to the second working fluid circuit through the second flow port and to increase the distance between the first free end and the second free end of the suspension strut assembly.

3. . A suspension strut assembly as claimed in claim 1 or claim 2 configured such that when the first flow port and the second flow port are controlled to be open:
flow of second working fluid into the second strut cylinder sub-chamber region from the second working fluid circuit through the second flow port causes relative movement between the strut cylinder and the strut cylinder piston to cause the first working fluid to flow from the first strut cylinder sub-chamber to the first working fluid circuit through the first flow port and to decrease the distance between the first free end and the second free end of the suspension strut assembly.

4. . A suspension strut assembly as claimed in any one of the preceding claims wherein an annulus is defined between the suspension rod and the strut cylinder.

5. . A suspension strut assembly as claimed in any one of the preceding claims wherein the suspension rod is hollow and defines a suspension rod chamber;
a suspension rod floating piston being located in, and operable to move along, the suspension rod chamber to define a first suspension rod sub-chamber region on one side of the suspension rod floating piston and a second suspension rod sub-chamber region on the other side of the suspension rod floating piston;
the first suspension rod sub-chamber region being in fluid communication with the first strut cylinder sub-chamber region and configured to retain the first working fluid.

6. . A suspension strut assembly as claimed in claim 5 wherein:
the first suspension rod sub-chamber region is in fluid communication with the first working fluid circuit via the first strut cylinder sub-chamber region.

7. . A suspension strut assembly as claimed in claim 5 or claim 6 wherein:
the second suspension rod sub-chamber region is configured to retain a third working fluid; the first suspension rod sub-chamber region being fluidly isolated from the second suspension rod sub-chamber region.

8. . A suspension strut assembly as claimed in any one of claims 4 to 7 further comprising:
an accumulator in fluid communication with the annulus;
the accumulator being hollow and defines an accumulator chamber, an accumulator floating piston being provided in, and operable to move along, the accumulator chamber, to define a first accumulator sub-chamber region on one side of the secondary accumulator floating piston and a second accumulator sub-chamber region on the other side of the secondary accumulator floating piston;
the first accumulator sub-chamber region being in fluid communication with the annulus and configured to retain the second working fluid; the first accumulator sub-chamber region being in fluid communication with the second working fluid circuit;
the second accumulator sub-chamber region configured to retain a fourth working fluid; the first accumulator sub-chamber region being fluidly isolated from the second accumulator sub-chamber region.

9. . A suspension strut assembly as claimed in any one of the preceding claims wherein a first mount defines the first free end of the strut cylinder; and a second mount defines the second free end of the suspension rod.

10. . A suspension system for a vehicle comprising a first suspension strut assembly as claimed in any one of claims 1 to 9 and a control system, the control system operable to control the first flow port and second flow port.

11. . A suspension system for a vehicle as claimed in claim 10 further comprising a second suspension strut assembly as claimed in any one of claims 1 to 9, wherein the first suspension strut assembly and second suspension strut assembly are operable independently of one another.

12. . A vehicle comprising a suspension system as claimed in claim 10 or claim 11 wherein one of the first mount or second mount is coupled to a chassis of the vehicle and the other of the first mount and second mount is coupled to a chassis support.

13. . A method of operation of a suspension system for a vehicle wherein in a first mode of operation:
the first flow port is open and the first working fluid is controlled to flow from the first strut cylinder sub-chamber region to the first working fluid circuit; and
the second flow port is open and the second working fluid is controlled to flow from the second working fluid circuit to the second strut cylinder sub-chamber region to decrease the distance between the first free end and the second free end of the suspension strut assembly.

14. . A method of operation of as claimed in claim 13 wherein in a second mode of operation:
the first flow port is open and the first working fluid is controlled to flow to the first strut cylinder sub-chamber region from the first working fluid circuit; and
the second flow port is open and the second working fluid is controlled to flow to the second working fluid circuit from the second strut cylinder sub-chamber region to increase the distance between the first free end and the second free end of the suspension strut assembly.

15. . A method of operation of as claimed in claim 13 or claim 14 wherein in a third mode of operation:
the first flow port is closed;
the second flow port is closed;
the suspension rod floating piston is located substantially midway along the length of the suspension rod chamber; and
the accumulator floating piston is located substantially midway along the length of the accumulator chamber, such that:
in response to a compressive force on the suspension strut assembly, the first working fluid flows from the first strut cylinder sub-chamber region to the first suspension rod sub-chamber region, and the third working fluid is compressed; and the second working fluid flows from the first accumulator sub-chamber region to the second strut cylinder sub-chamber region such that the fourth working fluid expands; and
in response to a reduction in compressive force on the suspension strut assembly, the first working fluid flows to the first strut cylinder sub-chamber region from the first suspension rod sub-chamber region, and the third working fluid is expanded, and the second working fluid flows to the first accumulator sub-chamber region from the second strut cylinder sub-chamber region such that the fourth working fluid compresses.
